# EUROPEAN PATENT SPECIFICATION

(11) **EP 4 018 893 B1**
(45) Date of publication and mention of the grant of the patent: **19.07.2023**
(21) Application number: 21215387.8
(22) Date of filing: 17.12.2021
(51) Int. Cl.: A47J 45/06

(54) **HANDLE WITH INSEPARABLE ATTACHMENT, FOR A COOKING CONTAINER**
GRIFF MIT UNLÖSBARER BEFESTIGUNG FÜR EINEN KOCHBEHÄLTER
POIGNÉE AVEC FIXATION INSÉPARABLE, POUR UN RÉCIPIENT DE CUISSON

(30) Priority: 22.12.2020 IT 202000031790
(43) Date of publication of application: 29.06.2022
(73) Proprietor: SANMIRO S.R.L., 23861 Cesana Brianza (LC) (IT)
(72) Inventor: SAMPIETRO, Edoardo, 23868 Via Monsignor Pozzi, 23 - Valmadrera (Lecco) (IT)
(74) Representative: Mittler, Andrea

(56) References cited:
- EP-A1- 0 508 972
- EP-A1- 0 521 795
- US-A1- 2007 201 944

## Description

The present invention relates to a handle with inseparable attachment, for a cooking container.

Common containers for cooking food, for example pans, pots and casseroles, are provided with grips, i.e. handles, adapted to facilitate gripping of the container without the risk of burns.

In particular, the pans have a single elongated grip, called handle, fixed to a cooking container which houses the food and which is placed on a heat source, for example a gas stove.

The handle is made of thermosetting material, for example bakelite, thermoplastic material or silicone.

The handle is usually fixed to the cooking container by a metal attachment comprising a plate for direct fixing to the cooking container by welding or rivets.

The connection between the metal attachment and the handle is normally irreversible and is made in the factory by overmolding, gluing or with screws or rivets.

GB-2347641 describes a method of irreversibly connecting a metal attachment to a handle, comprising the use of a mold. The metal attachment includes a gripping area protruding in a direction orthogonal to the longitudinal direction of the handle, in which said gripping area is coupled with an undercut of a seat of the handle.

Disadvantageously it is necessary to make a special mold with high costs and manufacturing difficulties.

GB-2183196 describes a system for fixing a handle to a cooking container comprising an intermediate cup-shaped element having a base and four side walls extending from the base and which are separated from each other by slits. Two opposite side walls include teeth protruding outwards.

Disadvantageously, making the intermediate element appears complicated, as does the assembly, in particular the positioning of the intermediate element.

Reversible connections between the handle and the metal attachment are also known, in which elastically deformable means of the metal attachment are reversibly coupled with a seat of the handle.

For example EP-3260027 describes a metal attachment for a handle comprising elastically deformable fixing means adapted to incline below a lower surface of the metal attachment.

Disadvantageously, said fixing means are complex to make, as the shape of the seat inside the handle which must have walls adapted to oppose the uncoupling of the handle from the metal attachment.

Consequently, the reversibility of the coupling is partial and subject to damage the inner seat of the handle.

Object of the present invention is to provide a gripping assembly for a cooking container of food, comprising a handle and a metal attachment adapted to fix the handle to the cooking container, wherein the coupling between the handle and the metal attachment is irreversible. A gripping assembly comprising the features of the preamble of claim 1 is known from EP0508972A.

A further object of the present invention is that said irreversible coupling is simple to make and stable.

Still a further object of the present invention is that the metal attachment is economical and adapts to normally used handles, comfortable for the user.

According to the invention, said and further objects are achieved with a gripping assembly for a cooking container of food, comprising a handle and a metal attachment able to fix the handle to the cooking container, wherein the metal attachment is irreversibly coupled to the handle and comprises a plate for fixing to the cooking container,
the metal attachment comprises a quick coupling irreversibly coupled with a seat of the handle,
wherein the quick coupling comprises two toothed elements of elongated shape parallel to each other and separated by a space,
wherein each toothed element comprises a plurality of teeth protruding outwards with respect to a central axis able to divide said space in half and extending in the direction of elongation of the toothed elements,
wherein the teeth of one toothed element are misaligned with respect to the teeth of the other toothed element with a misalignment along the central axis with respect to lines orthogonal to the central axis,
wherein the seat of the handle comprises two housings for respective toothed elements, separated by a body able to occupy said space between the two toothed elements,
wherein the seat of the handle is able to deform as a result of the pressure exerted by the teeth of the toothed elements.

Advantageously, the asymmetry of the teeth with respect to the central axis determines a secure grip of the quick coupling to the seat.

Consequently, the metal attachment is irreversibly fixed to the handle.

In order to achieve said deformation, the handle must be made of bakelite or other material which allows said deformation, for example wood or soft plastics such as nylon or moplen.

Advantageously, the gripping force acts in the direction of the lines orthogonal to the central axis, in particular outwards, or in the direction in which the teeth protrude.

The toothed elements remain parallel to the direction of the central axis, namely there is no transverse stress.

These and other features of the present invention will become more apparent from the following detailed description of a practical exemplary embodiment thereof, shown by way of non-limiting example in the accompanying drawings, in which:

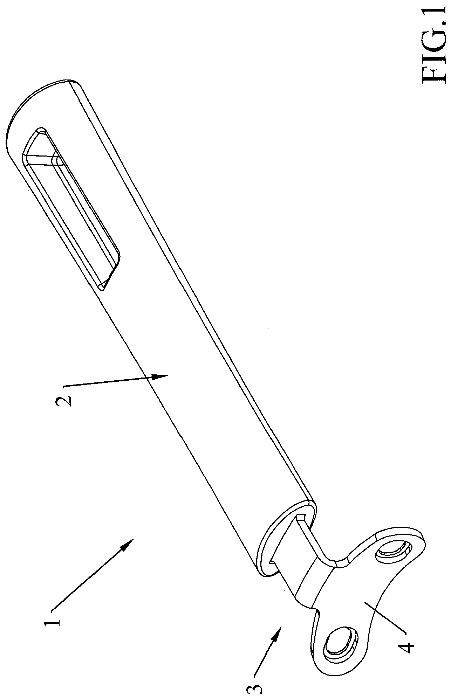

figure 1 shows a perspective view of a gripping assembly according to the present invention;

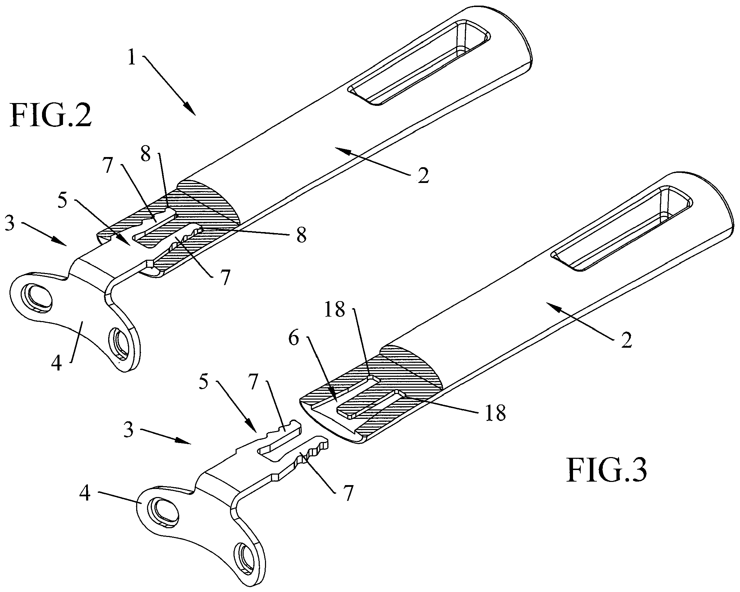

figure 2 shows a perspective view of the gripping assembly, with a sectional slit in a fixing area of a metal attachment;
figure 3 shows a perspective view of the gripping assembly of figure 2, wherein the metal attachment is separated by a handle;
figure 4 shows a top plan view of the gripping assembly of figure 2;
figure 5 shows a top plan view of the gripping assembly of figure 3;
figure 6 shows an enlarged detail of the gripping assembly contained in circle A of figure 4;
figure 7 shows a top plan view of the metal attachment;
figure 8 shows an enlarged detail of the metal attachment contained in circle B of figure 7;

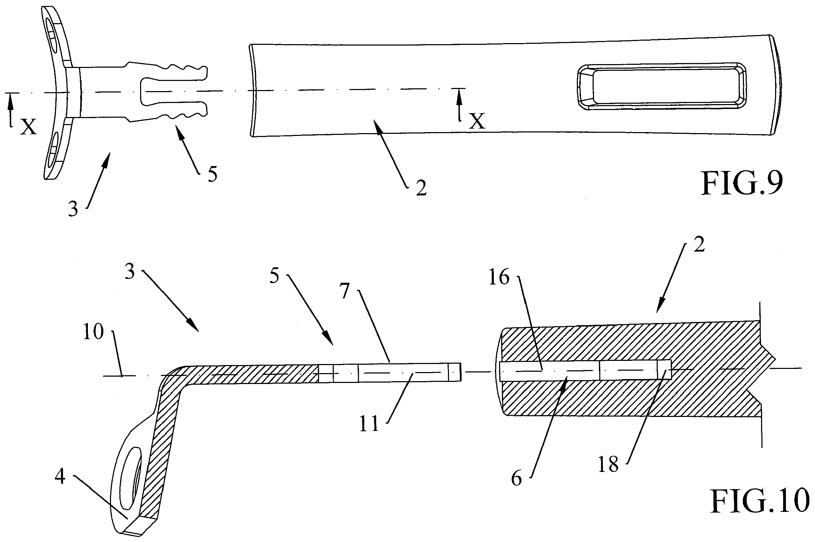

figure 9 shows a top plan view of the gripping assembly, wherein the metal attachment is separated from the handle;
figure 10 shows an enlarged sectional view along the line X-X of figure 9.

A gripping assembly 1 for a cooking container of food, comprises a handle 2 and a metal attachment 3 adapted to fix the handle 2 to the cooking container (not shown in the figures).

The handle 2 is for example a handle of a pan, namely it has an elongated shape with a prevalent longitudinal direction, as shown in the figures.

The metal attachment 3 comprises a plate 4 for fixing to the cooking container, for example by welding or rivets, and a quick coupling 5.

The handle 2 comprises a seat 6 and is preferably made of bakelite.

The quick coupling 5 is adapted to couple to the seat 6 so as to make the handle 2 irreversibly integral with the metal attachment 3.

More in detail, the quick coupling 5 comprises two toothed elements 7 having an elongated shape in the direction of a central axis 10 which separates a space between the two toothed elements 7 which are parallel to each other.

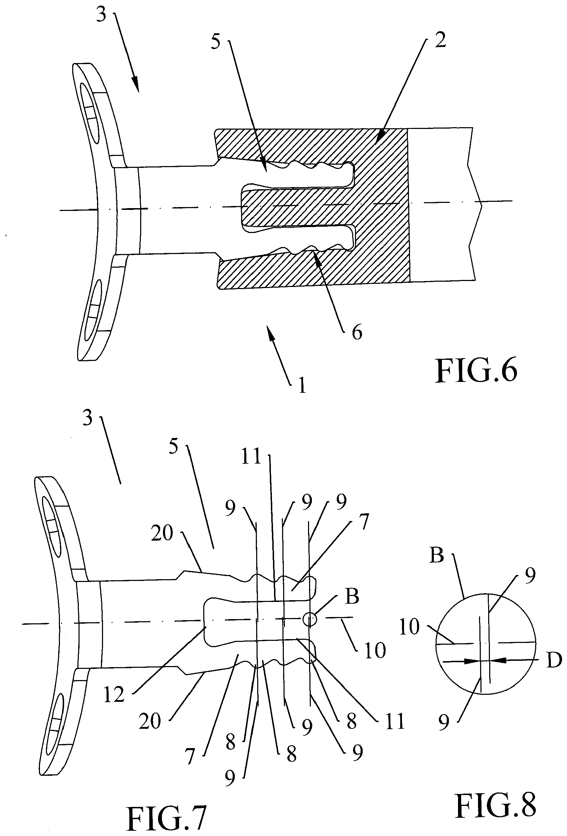

Each toothed element 7 comprises a plurality of teeth 8 protruding outwards, wherein the teeth 8 of a toothed element 7 are misaligned with respect to the teeth 8 of the other toothed element 7, with a misalignment D along the central axis 10 with respect to lines 9 orthogonal to the central axis 10, namely the toothed elements 7 are asymmetrical with respect to the central axis 10 (figures 7 and 8).

Each toothed element 7 further comprises an inclined outer edge 20, said inclination occurring towards the central axis 10 proceeding towards the free end of the toothed element 7, before the teeth 8.

Finally, each toothed element 7 includes straight inner edges 11 joined together by an inner groove 12.

The quick coupling 5 has a substantially U-shape, with teeth 8 protruding outwards from the legs of the U.

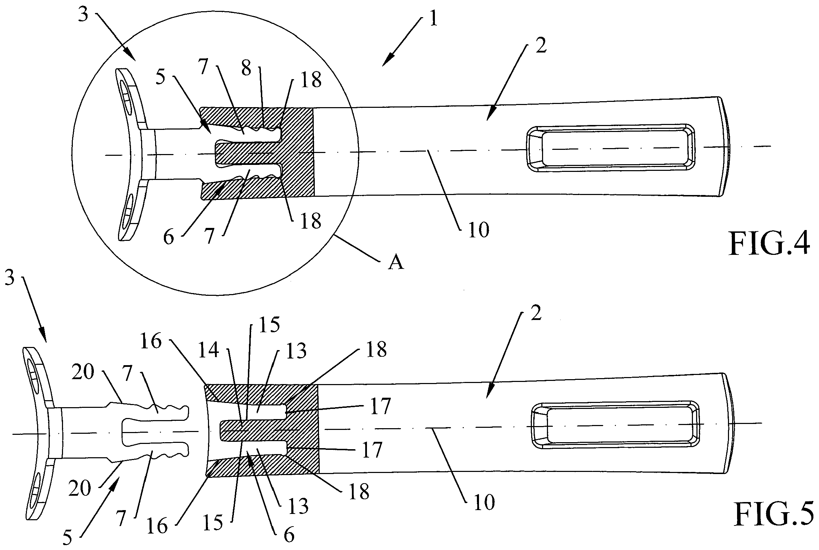

The seat 6 of the handle 2 comprises two housings 13 for respective toothed elements 7, separated by a body 14 (figure 5).

Each housing 13 has a straight inner edge 15 and an inclined outer edge 16, said inclination occurring outwards with respect to the central axis 10, proceeding towards the open end of the housings 13 through which the quick coupling 5 is inserted.

The housings 13 also have a closed end 17 with an undercut 18.

The combination of the inclined outer edges 16 of the housings 13 forms a conical seat for the quick coupling 5.

Operatively, the coupling of the metal attachment 3 with the handle 2 is very simple: it is sufficient to insert the toothed elements 7 in the respective housings 13 until the last teeth 8 of each toothed element 7 couple with the undercut 18 of the respective housing 13.

The housings 13 are sized so as to allow the insertion of the toothed elements 7, wherein the teeth 8 interfere with the inclined outer edges 16 of the housings 13.

The conical seat of the handle 2 facilitates the insertion of the toothed elements 7 the inclined outer edges 20 of which couple with the inclined outer edges 16 of the housings 13.

Once the insertion of the quick coupling 5 into the seat 6 has been completed, the teeth 8 are sized so as to put pressure on the outer edges of the seat 6 which deforms as a result of said pressure. Each outer edge of the seat 6 at least partially comprises the inclined outer edge 16.

Advantageously, the asymmetry of the teeth 8 with respect to the central axis 10 determines a secure grip of the quick coupling 5 to the seat 6.

Consequently, the metal attachment 3 is irreversibly fixed to the handle 2.

In order to achieve said deformation of the seat 6, the handle 2 must be made of bakelite or other material which allows said deformation, for example wood or soft plastics such as nylon or moplen.

The misalignment D of the teeth 8 is preferably less than one millimeter, preferably between 0.2 mm and 0.5 mm, even more preferably equal to 0.3 mm.

Advantageously, the gripping force acts in the direction of the lines 9, in particular outwards, namely in the direction in which the teeth 8 protrude.

The toothed elements 7 remain parallel to the direction of the central axis 10, namely there is no transverse stress, namely orthogonal to the plane identified in figures 4 and 5.

The gripping assembly 1 according to the present invention is particularly resistant to traction as demonstrated by a test carried out in a quality control laboratory called "Sigma Tre Lab" in Garbagnate Monastero (Lecco, Italy).

Five bakelite gripping assemblies 1 have successfully passed a cold tensile strength test up to 80 kg (test report no. 2020120178 of 10.12.2020; internal order no. 202003219; tests carried out on December 8, 2020; specifications applied according to the UNI-EN 12983-1:2005 standard; test method: tensile tests at room temperature; test method: UNI EN ISO 6892-1:2020).

## Claims

1. Gripping assembly (1) for a cooking container of food, comprising a handle (2) and a metal attachment (3) able to fix the handle (2) to the cooking container, wherein the metal attachment (3) is irreversibly coupled to the handle (2) and comprises a fixing plate (4) to the cooking container,
the metal attachment (3) comprises a quick coupling (5) irreversibly coupled with a seat (6) of the handle (2),
wherein the quick coupling (5) comprises two toothed elements (7) of elongated shape parallel to each other and separated by a space,
wherein each toothed element (7) comprises a plurality of teeth (8) which protrude outwards with respect to a central axis (10) able to divide said space in half and which develops in the direction of elongation of the toothed elements (7), wherein the seat (6) of the handle (2) is able to deform as a result of the pressure exerted by the teeth (8) of the toothed elements (7),
**characterised in that**
the teeth (8) of one toothed element (7) are misaligned with respect to the teeth (8) of the other toothed element (7) with a misalignment (D) along the central axis (10) with respect to lines (9) orthogonal to the central axis (10),
wherein the seat (6) of the handle (2) includes two housings (13) for respective toothed elements (7), separated by a body (14) able to occupy said space between the two toothed elements (7).

2. Gripping assembly (1) according to claim 1, **characterized in that** the housings (13) have a closed end (17) with an undercut (18) able to couple with the last teeth (8) of respective toothed elements (7).

3. Gripping assembly (1) according to claim 1 or 2, **characterized in that** each toothed element (7) comprises an inclined outer edge (20), said inclination of the inclined outer edge (20) taking place towards the central axis (10) proceeding towards the free end of the toothed element (7) before the teeth (8), wherein each housing (13) has an inclined outer edge (16), said inclination of the inclined outer edge (13) of each housing (13) taking place outwards with respect to the central axis (10) proceeding towards the open end of the housings (13), the combination of the inclined outer edges (16) of the housings (13) forming a conical seat for the inclined outer edges (20) of the quick coupling (5).

4. Gripping assembly (1) according to any one of the preceding claims, **characterized in that** each toothed element (7) has straight inner edges (11) joined together by an inner groove (12), wherein each housing (13) provides a straight inner edge (15) able to couple with a respective straight inner edge (11) of a toothed element (7).

5. Gripping assembly (1) according to any of the preceding claims, **characterized in that** the handle (2) is made of bakelite, wood, nylon or moplen.

6. Gripping assembly (1) according to any one of the preceding claims, **characterized in that** the misalignment (D) of the teeth (8) is less than one millimeter, preferably between 0.2 mm and 0.5 mm, even more preferably equal to 0.3 mm.

7. Gripping assembly (1) according to any of the preceding claims, **characterized in that** the handle (2) is a handle of a cooking pan.

## Patentansprüche

1. Greifanordnung (1) für einen Nahrungsmittel-Kochbehälter, mit einem Griff (2) und einem Metallansatz (3), mit dem der Griff (2) an dem Kochbehälter befestigt werden kann, wobei der Metallansatz (3) mit dem Griff (2) irreversibel verbunden ist und eine Befestigungsplatte (4) zur Befestigung an dem Kochbehälter aufweist,
wobei der Metallansatz (3) eine Schnellkupplung (5) aufweist, die mit einem Sitz (6) des Griffs (2) irreversibel gekoppelt ist,
wobei die Schnellkupplung (5) zwei gezahnte Elemente (7) mit länglicher Form aufweist, die parallel zueinander sind und durch einen Zwischenraum getrennt sind,
wobei jedes gezahnte Element (7) eine Mehrzahl von Zähnen (8) aufweist, die in Bezug auf eine Mittelachse (10) nach außen vorstehen, die in der Lage ist, den Raum in zwei Hälften zu teilen und die sich in der Längserstreckungsrichtung der gezahnten Elemente (7) erstreckt,
wobei sich der Sitz (6) des Griffs (2) durch den von den Zähnen (8) der gezahnten Elemente (7) ausgeübten Druck verformen kann,
**dadurch gekennzeichnet,**
**dass** die Zähne (8) des einen gezahnten Elements (7) gegenüber den Zähnen (8) des anderen gezahnten Elements (7) mit einem Versatz (D) entlang der Mittelachse (10) in Bezug auf Linien (9) versetzt sind, die orthogonal zu der Mittelachse (10) sind,
wobei der Sitz (6) des Griffs (2) zwei Aufnahmen (13) für jeweilige gezahnte Elemente (7) aufweist, die durch einen Körper (14) getrennt sind, der den Raum zwischen den beiden gezahnten Elementen (7) einnehmen kann.

2. Greifanordnung (1) nach Anspruch 1,
**dadurch gekennzeichnet, dass** die Aufnahmen (13) ein geschlossenes Ende (17) mit einer Hinterschneidung (18) aufweisen, die mit den letzten Zähnen (8) der jeweiligen gezahnten Elemente (7) gekoppelt werden kann.

3. Greifanordnung (1) nach Anspruch 1 oder 2,
**dadurch gekennzeichnet, dass** jedes gezahnte Element (7) eine geneigte Außenkante (20) aufweist, wobei die Neigung der geneigten Außenkante (20) zur Mittelachse (10) hin erfolgt und zum freien Ende des gezahnten Elements (7) vor den Zähnen (8) fortschreitet, wobei jede Aufnahme (13) eine geneigte Außenkante (16) aufweist, wobei die Neigung der geneigten Außenkante (16) jeder Aufnahme (13) in Bezug auf die Mittelachse (10) nach außen erfolgt und in Richtung auf das offene Ende der Aufnahmen (13) fortschreitet, wobei die Kombination der geneigten Außenkanten (16) der Aufnahmen (13) einen konischen Sitz für die geneigten Außenkanten (20) der Schnellkupplung (5) bildet.

4. Greifanordnung (1) nach einem der vorhergehenden Ansprüche,
**dadurch gekennzeichnet, dass** jedes gezahnte Element (7) gerade Innenkanten (11) aufweist, die durch eine Innennut (12) miteinander verbunden sind, wobei jede Aufnahme (13) eine gerade Innenkante (15) bereitstellt, die mit einer jeweiligen geraden Innenkante (11) eines gezahnten Elements (7) gekoppelt werden kann.

5. Greifanordnung (1) nach einem der vorhergehenden Ansprüche,
**dadurch gekennzeichnet, dass** der Griff (2) aus Bakelit, Holz, Nylon oder Moplen besteht.

6. Greifanordnung (1) nach einem der vorhergehenden Ansprüche,
**dadurch gekennzeichnet, dass** der Versatz (D) der Zähne (8) geringer als ein Millimeter, vorzugsweise zwischen 0,2 mm und 0,5 mm, noch bevorzugter gleich 0,3 mm ist.

7. Greifanordnung (1) nach einem der vorhergehenden Ansprüche,
**dadurch gekennzeichnet, dass** der Griff (2) ein Griff einer Kochpfanne ist.

## Revendications

1. Ensemble de préhension (1) pour un récipient alimentaire de cuisson, comprenant une poignée (2) et une fixation métallique (3) pouvant fixer la poignée (2) au récipient de cuisson, dans lequel la fixation métallique (3) est couplée, de manière irréversible à la poignée (2) et comprend une plaque de fixation (4) sur le récipient de cuisson,
la fixation métallique (3) comprend un couplage rapide (5) couplé, de manière irréversible, avec un siège (6) de la poignée (2),
dans lequel le couplage rapide (5) comprend deux éléments dentés (7) de forme allongée parallèles entre eux et séparés par un espace,
dans lequel chaque élément denté (7) comprend une pluralité de dents (8) qui font saillie vers l'extérieur par rapport à un axe central (10) pouvant diviser ledit espace en deux et qui se développe dans la direction d'allongement des éléments dentés (7), dans lequel le siège (6) de la poignée (2) peut se déformer en raison de la pression exercée par les dents (8) des éléments dentés (7),
**caractérisé en ce que** :
les dents (8) d'un élément denté (7) présentent un défaut d'alignement par rapport aux dents (8) de l'autre élément denté (7) avec un défaut d'alignement (D) le long de l'axe central (10) par rapport aux lignes (9) orthogonales à l'axe central (10),
dans lequel le siège (6) de la poignée (2) comprend deux logements (13) pour les éléments dentés (7) respectifs, séparés par un corps (14) pouvant occuper ledit espace entre les deux éléments dentés (7).

2. Ensemble de préhension (1) selon la revendication 1, **caractérisé en ce que** les logements (13) ont une extrémité fermée (17) avec un dégagement (18) pouvant se coupler avec les dernières dents (8) des éléments dentés (7) respectifs.

3. Ensemble de préhension (1) selon la revendication 1 ou 2, **caractérisé en ce que** chaque élément denté (7) comprend un bord externe incliné (20), ladite inclinaison du bord externe incliné (20) ayant lieu vers l'axe central (10) continuant vers l'extrémité libre de l'élément denté (7) avant les dents (8), dans lequel chaque logement (13) a un bord externe incliné (16), ladite inclinaison du bord externe incliné (13) de chaque logement (13) ayant lieu vers l'extérieur par rapport à l'axe central (10) continuant vers l'extrémité ouverte des logements (13), la combinaison des bords externes inclinés (16) des logements (13) formant un siège conique pour les bords externes inclinés (20) du couplage rapide (5).

4. Ensemble de préhension (1) selon l'une quelconque des revendications précédentes, **caractérisé en ce que** chaque élément denté (7) a des bords internes droits (11) assemblés par une rainure interne (12), dans lequel chaque logement (13) fournit un bord interne droit (15) pouvant se coupler avec un bord interne droit (11) respectif d'un élément denté (7).

5. Ensemble de préhension (1) selon l'une quelconque des revendications précédentes, **caractérisé en ce que** la poignée (2) est réalisée à partir de bakélite, de bois, de nylon ou de moplen.

6. Ensemble de préhension (1) selon l'une quelconque des revendications précédentes, **caractérisé en ce que** le défaut d'alignement (D) des dents (8) est inférieur à un millimètre, de préférence compris entre 0,2 mm et 0,5 mm, encore de préférence égal à 0,3 mm.

7. Ensemble de préhension (1) selon l'une quelconque des revendications précédentes, **caractérisé en ce que** la poignée (2) est une poignée d'un récipient de cuisson.
